(19) Europäisches Patentamt
European Patent Office
Office européen des brevets

(11) Veröffentlichungsnummer: **0 010 147**
**B1**

# (12) EUROPÄISCHE PATENTSCHRIFT

(45) Veröffentlichungstag der Patentschrift: **10.06.81**

(51) Int. Cl.³: **C 07 F 9/38**, C 02 F 5/14, C 07 F 9/65

(21) Anmeldenummer: **79103229.5**

(22) Anmeldetag: **31.08.79**

(54) **N,N'-Dialkyl-ureidomethan-diphosphonsäure, deren Herstellung und Verwendung.**

(30) Priorität: **02.09.78 DE 2838437**

(43) Veröffentlichungstag der Anmeldung
**30.04.80 Patentblatt 80/9**

(45) Bekanntmachung des Hinweises auf die Patenterteilung
**10.06.81 Patentblatt 81/23**

(84) Benannte Vertragsstaaten
**AT BE CH DE FR GB NL**

(56) Entgegenhaltungen
**DE-A-2 200 719**
**DE-A1-2 745 084**
**DE-B2-2 446 749**
**DE-C3-2 254 095**
**US-A-3 763 281**
**US-A-4 003 965**

(73) Patentinhaber: **Joh. A. Benckiser GmbH,**
**Benckiserplatz 1, D-6700 Ludwigshafen/Rh. 1 (DE)**

(72) Erfinder: **Krüger, Friedrich, Dr., Erzberger Strasse 27,**
**D-6803 Edingen (DE)**
Erfinder: **Michel, Walter, Kallstadter Strasse 10,**
**D-6804 Ilvesheim (DE)**

(74) Vertreter: **Zellentin, Rüdiger, Dr. et al,**
**Zweibrückenstrasse 15, D-8000 München 2 (DE)**

**EP 0 010 147 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

N,N'-Dialkyl-ureidomethan-diphosphonsäure, deren Herstellung und Verwendung

Die Erfindung betrifft den in den Patentansprüchen näher gekennzeichneten Gegenstand.

Am Stickstoff nicht substituierte Ureido-alkan-diphosphonsäuren sind bereits aus der deutschen Patentschrift 2 254 095 bekannt. Es sind leicht in Wasser lösliche Phosphonsäuren, die ein gutes Komplexbindevermögen besitzen und auch in Impfmengen wirksam sind.

Die Ureido-alkan-diphosphonsäuren werden durch Umsetzung von Acylharnstoff mit einem Gemisch aus phosphoriger Säure und Phosphortrichlorid bei Temperaturen bis 120° C, vorzugsweise in Gegenwart eines indifferenten Lösungsmittels erhalten oder nach der DE-AS 2 446 749 auch durch Erhitzen von Aminoalkandiphosphonsäuren mit Harnstoff im trockenen Luft- oder Stickstoffstrom. Beide Verfahren sind jedoch für eine Produktion im technischen Maßstab mit Nachteilen behaftet und größere Mengen der Phosphonsäuren lassen sich nur schwer herstellen.

Es wurden nun neue, bisher noch nicht beschriebene N,N'-Dialkyl-ureidomethan-diphosphonsäuren oder deren Alkalisalze der allgemeinen Formel

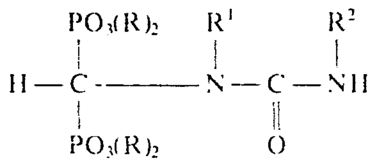

gefunden, wobei $R^1$ und $R^2$ einen Alkylrest mit 1 bis 3 C-Atomen, also gleich oder verschieden voneinander einen Methyl-, Äthyl-, Propyl- oder Isopropylrest oder zusammen einen ringbildenden Alkylenrest mit 2 bis 3 C-Atomen, also einen Äthylen-, Propylen- oder Methyläthylenrest, bedeuten und R ein Wasserstoffatom oder ein Alkalimetall ist.

Die neuen Phosphonsäuren besitzen gegenüber den am Stickstoff nicht substituierten Ureido-alkan-diphosphonsäuren eine noch bessere Impfwirkung, sie sind ebenfalls sehr leicht in Wasser löslich, lassen sich außerdem auf eine einfachere und billigere Weise herstellen.

Die neuen Phosphonsäuren besitzen auch ein sehr gutes Komplexbindevermögen gegenüber zwei- und mehrwertigen Metallionen, wie z. B. Calcium, Magnesium, Eisen, Chrom, Mangan und anderen. In unterstöchiometrischen Mengen angewandt eignen sich die neuen Phosphonsäuren als ausgezeichnete Mittel zur Stabilisierung der Wasserhärte. Sie können in feste und flüssige Produkte eingearbeitet werden, die in wäßrigen Medien einzusetzen sind. Außerdem vertragen sich die neuen Verbindungen mit den üblichen Waschrohstoffen, so daß sie als »Builder« in Wasch- und Reinigungsmitteln entweder anstelle der Polyphosphate oder zusammen mit diesen eingesetzt werden können. Im Prinzip sind die neuen Phosphonsäuren auf allen Gebieten zu verwenden, in denen Polyphosphate oder andere Komplexbildner wie Äthylendiamintetraessigsäure, Nitrilotriessigsäure Einsatz finden.

In den folgenden Tabellen ist beispielsweise die gute Impfwirkung der erfindungsgemäßen N,N'-Propylenureidomethan-diphosphonsäure im Vergleich zur nicht am Stickstoff substituierten Ureidomethan-diphosphonsäure und der Aminomethandiphosphonsäure zu sehen.

Zur Bestimmung der Impfwirkung im alkalischen Bereich wurde in einem 1000-ml-Becherglas eine bestimmte Menge der zu testenden Substanz in 1 l Wasser von 17,5°dH gelöst und 12 g Ätznatron zugegeben. Das Becherglas wurde mit einem Uhrglas bedeckt und bei Zimmertemperatur stehen gelassen. Es wurde dann geprüft, ob sich am Glasstab bzw. an der Wandung des Becherglases Kristalle abgesetzt hatten.

Tabelle I

Impfwirkung im alkalischen Bereich

| Phosphonsäure | Menge mg | 2 | 4 | 6 | 8 | 10 Tage |
|---|---|---|---|---|---|---|
| N,N'-Dimethyl-ureidomethan-diphosphonsäure | 3,5 | 0 | – | – | – | – |
| | 5,0 | 0 | 0 | – | – | – |
| | 10,0 | 0 | 0 | 0 | 0 | – |
| N,N'-Propylen-ureidomethan-diphosphonsäure | 3,5 | – | – | – | – | – |
| | 5,0 | 0 | – | – | – | – |
| | 10,0 | 0 | 0 | 0 | – | – |
| Ureidomethan-diphosphonsäure | 3,5 | – | – | – | – | – |
| | 5,0 | – | – | – | – | – |
| | 10,0 | 0 | 0 | – | – | – |
| Aminomethan-diphosphonsäure | 3,5 | – | – | – | – | – |
| | 5,0 | – | – | – | – | – |
| | 10,0 | – | – | – | – | – |

0 = kein Belag

– = Beginn der Abscheidung von Calcitkristallen

**Die erfindungsgemäßen N,N'-disubstituierten Ureidomethan-diphosphonsäuren besitzen auch im neutralen Bereich einen überlegenen Stabilisiereffekt gegenüber den am Stickstoff nicht substituierten Ureidomethan-diphosphonsäuren. Sie sind deshalb auch zum Stabilisieren der Wasserhärte in Kühlkreisläufen geeignet.**

**Die bessere Stabilisierwirkung im neutralen Bereich wird in der Tabelle II gezeigt.**

**Dazu wurden 100 ml Wasser bekannter Härte mit 2,0 mg Substanz versetzt, auf pH 7 eingestellt und in einem Wärmeschrank 16 Stunden bei 80°C gehalten. Dann wurde mit dest. Wasser auf 100 ml aufgefüllt, durch ein doppeltes Faltenfilter filtriert, im Filtrat die Resthärte bestimmt und gemäß DIN 19 640 in mval Erdalkaliionen im Liter umgerechnet (1 mval Erdalkaliion = 2,8° dH).**

Tabelle II

Stabilisierwirkung im neutralen Bereich

| Phosphonsäure | mval Erdalkaliionen | Prozentuale Hemmung |
|---|---|---|
| N,N'-Dimethyl-ureidomethan-diphosphonsäure | 6,32 | 96,20 |
| N,N'-Dipropylen-ureidomethan-diphosphonsäure | 6,29 | 95,65 |
| Ureidomethan-diphosphonsäure | 4,2 | 63,6 |

Die erfindungsgemäßen N,N'-Dialkyl-ureidomethan-diphosphonsäuren oder deren Alkalisalze werden dadurch erhalten, daß man Ameisensäure mit einem N,N'-dialkylsubstituierten Harnstoff der Formel

$R^1-NH-CO-NH-R^2$

in der $R^1$ und $R^2$ wie oben definiert sind, und Phosphortrichlorid umsetzt und gegebenenfalls die Alkalisalze bildet.

Bisher ist in der Literatur noch keine Phosphonsäureherstellung aus Ameisensäure bekannt. Es sind lediglich Derivate der Ameisensäure z. B. Formamid oder HCN zur Darstellung der Aminomethandiphosphonsäuren verwendet worden.

Es war deshalb überraschend, daß die neuen N,N'-Dialkyl-ureidomethan-diphosphonsäuren aus den drei Komponenten: Ameisensäure, Dialkylharnstoff und Phosphortrichlorid in so glatter Weise und guter Ausbeute gebildet werden.

An N,N'-disubstituierten Harnstoffen kommen vorzugsweise Dimethyl- bis Dipropylharnstoff oder auch N,N'-Äthylen- oder Propylenharnstoff in Frage.

Zur Darstellung der neuen Phosphonsäuren verfährt man vorteilhaft so, daß man Ameisensäure und den N,N'-disubstituierten Harnstoff vorlegt und dazu Phosphortrichlorid tropft. Vorzugsweise wird vor der $PCl_3$-Zugabe das Gemisch aus Ameisensäure und N,N'-Dialkylharnstoff auf ca. 80°C erhitzt. Man kann das $PCl_3$ aber auch ohne Vorwärmen des Gemisches langsam zutropfen. Während der $PCl_3$-Zugabe steigt die Innentemperatur auf max. 125°C an und fällt dann langsam wieder ab. Anschließend wird noch kurz weiter erwärmt, bis kein Rücklauf mehr feststellbar ist und die HCl-Gasentwicklung beendet ist. Man erhält einen weißen, leicht in Wasser löslichen Sirup. Der Sirup kann mit wenig Wasser zur Kristallisation gebracht werden. Zur vollständigen Kristallisation kann man die konz. wäßrige Lösung in Eisessig oder Ameisensäure oder ein organisches Lösungsmittel wie Aceton gießen. Die reinweiße kristalline Phosphonsäure fällt dabei in über 80%iger Ausbeute aus.

Beispiel 1

88,11 g (1,0 Mol) N,N'-Dimethylharnstoff und 88,55 g (1,75 Mol) Ameisensäure werden vereinigt und unter gutem Rühren auf 80°C gebracht. Dazu werden in ca. 30—40 Min. 151,03 g (1,1 Mol) Phosphortrichlorid getropft. Die Innentemperatur steigt dabei auf ca. 125°C an und fällt danach wieder langsam ab. Nachdem ca. 75°C erreicht sind, wird im siedenden Wasserbad noch weiter erhitzt, bis kein Rückfluß mehr erfolgt und die HCl-Gasentwicklung beendet ist. Man erhält 175 g eines weißen, schaumigen Sirups, der mit 50 ml Wasser verdünnt wird. Die Lösung wird in 300 ml 100%ige Essigsäure gegossen. Nach kurzem Rühren wird das rein weiße Kristallisat abgesaugt. Nach Waschen und Trocknen erhält man 116,25 g N,N'-Dimethyl-ureidomethan-diphosphonsäure.
Ausbeute 80,7% der Theorie bezogen auf $PCl_3$

Analyse

| | |
|---|---|
| Berechnet: | N 10,68%;P 23,66%; |
| gefunden: | N 10,6%;P 23,2%; |
| Fp: | 187°C |

Beispiel 2

100,1 g (1,0 Mol) Propylenharnstoff und 81,0 g (1,75 Mol) Ameisensäure werden bei 70°C unter Rühren vorgelegt. Zu der Reaktionsmischung werden 164,8 g (1,2 Mol) Phosphortrichlorid in ca. 30 Min. zugetropft. Die Temperatur steigt dabei auf ca. 115°C an und fällt dann langsam wieder ab. Anschließend wird noch im siedenden Wasserbad 1 Stunde nachgerührt. Zu der noch warmen Lösung werden 150 ml Wasser gegeben. Diese Lösung kann direkt eingesetzt werden.

Zur Isolierung der Phosphonsäure wird die wäßrige Lösung in 100%ige Essigsäure gegossen. Das entstehende Kristallisat wird nach kurzem Stehenlassen abgesaugt, gewaschen und getrocknet. Ausbeute: 40 g N,N'-Propylen-ureidomethan-diphosphonsäure.

Analyse

| | |
|---|---|
| Berechnet: | N 10,2%;P 22,6%; |
| gefunden: | N 10,0%;P 22,2%; |
| Fp: | 224°C |

Beispiel 3

88,11 g (1,0 Mol) N,N'-Dimethylharnstoff und 88,55 g (1,75 Mol) Ameisensäure werden unter gutem Rühren zusammengegeben. Dazu werden in ca. 30—40 Minuten 151,03 g (1,1 Mol) Phosphortrichlorid getropft. Die Innentemperatur steigt dabei auf ca. 110°C an und fällt dann wieder langsam ab. Nachdem ca. 75°C erreicht sind, wird im siedenden Wasserbad noch weiter erhitzt, bis kein Rückfluß mehr erfolgt und die HCl-Gasentwicklung beendet ist. Man erhält 175 g eines weißen, schaumigen Sirups, der mit 300 ml Ameisensäure verdünnt wird. Nach kurzem Rühren wird das rein weiße Kristallisat abgesaugt. Nach Waschen und Trocknen erhält man 116 g N,N'-Dimethylureidomethan-diphosphonsäure.
Fp: 187°C
Das Ameisensäure-Filtrat kann wieder zu einer neuen Umsetzung mit N,N'-Dimethylharnstoff und Phosphortrichlorid verwendet werden.

**Patentansprüche für die Vertragsstaaten: BE, CH, DE, FR, GB, NL**

1. N,N'-Dialkyl-ureidomethan-diphosphonsäuren oder deren Alkalisalze der allgemeinen Formel

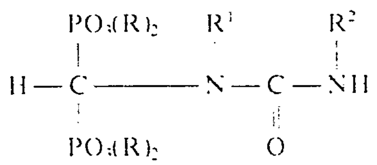

in der $R^1$ und $R^2$ einen Alkylrest mit 1 bis 3 C-Atomen oder zusammen einen ringbildenden Alkylenrest mit 2 oder 3 C-Atomen bedeuten und R ein Wasserstoffatom oder ein Alkalimetall ist.

2. Verfahren zur Herstellung von N,N'-Dialkyl-ureidomethan-diphosphonsäuren der allgemeinen Formel

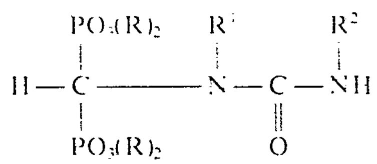

in der $R^1$ und $R^2$ einen Alkylrest mit 1 bis 3 C-Atomen oder zusammen einen ringbildenden Alkylenrest mit 2 oder 3 C-Atomen bedeuten und R ein Wasserstoffatom ist, dadurch gekennzeichnet, daß man Ameisensäure mit einem N,N'-dialkylsubstituierten Harnstoff der Formel

$$R^1-NH-CO-NH-R^2$$

in der $R^1$ und $R^2$ wie oben definiert sind, und Phosphortrichlorid umsetzt.

**Patentansprüche für den Vertragsstaat: AT**

1. Verfahren zur Herstellung von N,N'-Dialkyl-ureidomethan-diphosphonsäuren der allgemeinen Formel

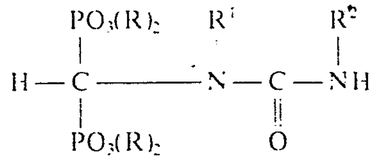

in der $R^1$ und $R^2$ einen Alkylrest mit 1 bis 3 C-Atomen oder zusammen einen ringbildenden Alkylenrest mit 2 oder 3 C-Atomen bedeuten und R ein Wasserstoffatom ist, dadurch gekennzeichnet, daß man Ameisensäure mit einem N,N'-dialkylsubstituierten Harnstoff der Formel

$$R^1-NH-CO-NH-R^2$$

in der $R^1$ und $R^2$ wie oben definiert sind, und Phosphortrichlorid umsetzt.

2. Verwendung von N,N'-Dialkyl-ureidomethan-diphosphonsäuren nach Anspruch 1 sowie von deren Alkalisalzen zur Verhinderung der Steinbildung in wäßrigen Systemen.

3. Verwendung von N,N'-Dialkyl-ureidomethan-diphosphonsäuren oder deren Alkalisalzen nach Anspruch 1 zur Verhinderung der Steinbildung in wäßrigen Systemen.

**Claims for the Contracting states: BE, CH, DE, FR, GB, NL**

1. N,N'-alkyl-ureidomethane diphosphonic acids or alkali salts thereof of the general formula

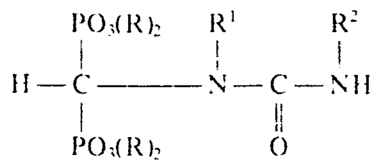

in which $R^1$ and $R^2$ signify an alkyl radical with 1 to 3 C-atoms or together signify a ring-forming alkylene radical with 2 or 3 C-atoms and R is a hydrogen atom or an alkali metal.

2. Process for the production of N,N'-dialkyl-ureidomethane diphosphonic acids of the general formula

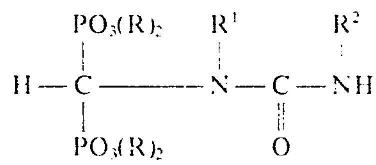

in which $R^1$ and $R^2$ signify an alkyl radical with 1 to 3 C-atoms or together signify a ring-forming alkylene radical with 2 or 3 C-atoms and R is a hydrogen atom, characterised in that formic acid is reacted with an N,N'-dialkylsubstituted urea of the formula

$$R^1-NH-CO-NH-R^2$$

in which $R^1$ and $R^2$ are as defined above, and phosphorus trichloride.

3. Use of N,N'-dialkyl-ureidomethane diphosphonic acids or their alkali salts according to Claim 1 for the prevention of stone formation in aqueous systems.

**Claims for the Contracting state: AT**

1. Process for the production of N,N'-dialkyl-ureidomethane diphosphonic acids of the general formula

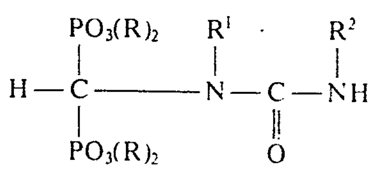

in which $R^1$ and $R^2$ signify an alkyl radical with 1 to 3 C-atoms or together signify a ring-forming alkylene radical with 2 or 3 C-atoms and R is a hydrogen atom, characterised in that formic acid is reacted with an N,N'-dialkylsubstituted urea of the formula

$$R^1-NH-CO-NH-R^2$$

in which $R^1$ and $R^2$ are as defined above, and phosphorus trichloride.

2. Use of N,N'-dialkyl-ureidomethane diphosphonic acids or their alkali salts according to Claim 1 for the prevention of stone formation in aqueous systems.

**Revendications pour les Etats contractants: BE, CH, DE, FR, GB, NL**

1. Acides N,N'-dialkyluréidométhane-diphosphoniques ou leurs sels alcalins ayant pour formule générale

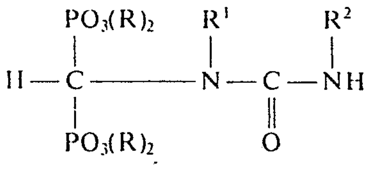

où $R_1$ et $R_2$ signifient un radical alkyle contenant 1 à 3 atomes de carbone ou, considérés ensemble, un radical alkylène cyclique et contenant 2 ou 3 atomes de carbone et R est un atome d'hydrogène ou un métal alcalin.

2. Procédé de préparation d'acides N,N'-dialkyle-uréidométhane-diphosphoniques ayant pour formule générale

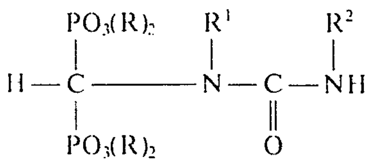

où $R_1$ et $R_2$ désignent un radical alkyle contenant 1 à 3 atomes de carbone ou, considérés ensemble, un radical alkylène formant un cycle contenant 2 ou 3 atomes de carbone et R est un atome d'hydrogène. Procédé caractérisé en ce que l'on fait réagir de l'acide formique avec de l'urée substituée en N,N'-dialkyle ayant pour formule

$$R_1-NH-CO-NH-R_2$$

ou $R_1$ et $R_2$ sont définis comme ci-dessus et avec du trichlorure de phosphoryle.

3. Utilisation des acides N,N'-dialkyle-uréidométhane-diphosphoniques ou de leurs sels alcalins suivant la revendication 1 à l'inhibition de la formation de tartre dans les milieux aqueux.

**Revendications pour l'Etat contractant: AT**

1. Procédé de préparation d'acides N,N'-dialkyle-uréidométhane-diphosphoniques ayant pour formule générale

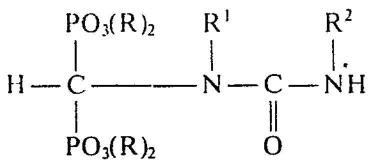

où $R_1$ et $R_2$ désignent un radical alkyle contenant 1 à 3 atomes de carbone ou, considérés ensemble, un radical alkyléne formant un cycle contenant 2 ou 3 atomes de carbone et R est un atome d'hydrogène. Procédè caractérisé en ce que l'on fait réagir de l'acide formique avec de l'urée substituée en N,N'-dialkyle ayant pour formule

$$R_1-NH-CO-NH-R_2$$

où $R_1$ et $R_2$ sont définis comme ci-dessus et avec du trichlorure de phosphoryle.

2. Utilisation des acides N,N'-dialkyle-uréidométhane-diphosphoniques ou de leurs sels alcalins suivant la revendication 1 à l'inhibition de la formation de tartre dans les milieux aqueux.